(19) Europäisches Patentamt
European Patent Office
Office européen des brevets

(11) **EP 2 607 922 A1**

(12) **EUROPÄISCHE PATENTANMELDUNG**

(43) Veröffentlichungstag:
26.06.2013 Patentblatt 2013/26

(51) Int Cl.:
*G01S 13/92* (2006.01)          *H01Q 19/00* (2006.01)
*H01Q 25/00* (2006.01)

(21) Anmeldenummer: 12197913.2

(22) Anmeldetag: 18.12.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.12.2011 DE 102011056861**

(71) Anmelder: **JENOPTIK Robot GmbH**
**40789 Monheim am Rhein (DE)**

(72) Erfinder: **Lehning, Dr. Michael**
**31137 Hildesheim (DE)**

(74) Vertreter: **Schaller, Renate et al**
**Patentanwälte Oehmke & Kollegen**
**Neugasse 13**
**07743 Jena (DE)**

(54) **Verfahren und Anordnung zur Erfassung von Messdaten eines Fahrzeugs in einem Radarfeld**

(57)     Verfahren und Anordnung zur Erfassung von Messdaten von einem ein Radarfeld (2) durchfahrenden Fahrzeug (4), bei dem in einem Radarfeld (2) ein Reflektor (7) angeordnet ist. Von dem Fahrzeug (4) werden direkte und indirekte Reflexionssignale empfangen und direkte und indirekte Messdaten abgeleitet, die geeignet sind, auf Korrelation zueinander überprüft zu werden, womit ein Anmessen des Fahrzeuges (4) durch Knickstrahlreflexion ausgeschlossen werden kann.

Fig. 1

EP 2 607 922 A1

**Beschreibung**

Die Erfindung betrifft ein Verfahren und eine Anordnung zur Erfassung von Messdaten eines Fahrzeugs in einem Radarfeld, wie dies gattungsgemäß aus der DE 10 2007 022 373 A1 bekannt ist.

Radarmessgeräte gehören zu den Hauptmessinstrumenten für die Überwachung und Durchsetzung von gesetzlichen Geschwindigkeitsbegrenzungen für Fahrzeuge. Damit derartige Messgeräte für den bestimmungsgemäßen Gebrauch zugelassen werden, muss einerseits sicher gestellt und plausibel gemacht werden, dass die gemessene Geschwindigkeit korrekt ist und andererseits muss die gemessene Geschwindigkeit einem Fahrzeug zweifelsfrei zugeordnet werden können.

Die Erfindung betrifft ein Verfahren und eine Anordnung, welches insbesondere die gemessene Geschwindigkeit plausibel macht und sicherstellt, dass diese nicht über eine Anmessung eines Fahrzeuges durch Knickstrahlreflexion erfasst wurde.

Die Tatsache, dass es Messsituationen gibt, in denen keine zweifelsfreie Zuordnung der gemessenen Geschwindigkeit zu dem angemessenen Fahrzeug möglich ist, ist insbesondere im Prinzip der Radartechnik begründet. Die Radarstrahlung bildet üblicherweise ein Radarfeld, das sich unter einem Winkel von ca. 5 - 10° ausbreitet und entsprechend mit zunehmender Entfernung vom Radarsender an Breite zunimmt, wodurch sich bei Anwendung auf einer mehrspurigen Fahrbahn gleichzeitig mehrere Fahrzeuge im Radarfeld befinden können.

Probleme bei der Durchführung von Radarmessungen können durch sogenannte Knickstrahlreflexionen verursacht sein. Dabei gelangen von einem Objekt reflektierte Radarstrahlen über ein in dem Radarfeld befindlichen und reflektierenden Objekt zum Empfänger des Radargeräts zurück. Durch diese nicht vorgesehenen Reflexionssignale wird ein virtuelles Objekt an einer Position erkannt, an dem sich das Objekt tatsächlich aber nicht befindet. Aus der DE 103 11 959 A1 ist ein Verfahren, ein Radargerät und eine Vorrichtung bekannt, mittels derer Geisterbilder erkannt werden können. Die in der DE 103 11 959 A1 offenbarte Lösung ist zur Verwendung in einem fahrenden Fahrzeug vorgesehen. Problematisch ist dabei, dass ein Radarfeld, das von einem fahrenden Fahrzeug abgestrahlt wird, andauernden und unbekannten Beeinflussungen und Störquellen unterworfen ist, wovon eine Folge das unerwünschte Auftreten von Geisterbildern ist. Es wird in einem Erfassungsbereich (Radarfeld) des Radargeräts ein erster Bereich und ein zweiter Bereich errichtet und mittels verschiedener Einheiten beurteilt, ob neben der Fahrspur, auf dem das Fahrzeug mit der Radargerät momentan fährt, eine weitere Fahrspur vorhanden ist, ob und in welchem der Bereiche ein Objekt erkannt wird und ob ein erkanntes sich auf einer erkannten Fahrspur befindet. Dabei ist es unerheblich, wodurch das Geisterbild verursacht wurde. Lediglich dessen Vorhandensein wird beurteilt.

Um ein angemessenes Fahrzeug, d. h. ein die Radarstrahlung reflektierendes Fahrzeug eindeutig zu identifizieren, d. h. das angemessene Fahrzeug in einer Gruppe von Fahrzeugen zu erkennen, wird in der EP 0 935 764 B1 vorgeschlagen, gleichzeitig mit der Geschwindigkeit auch die Entfernung zu erfassen und über die erfasste Entfernung das Fahrzeug einer Fahrspur zuzuordnen.

Im Unterschied zur Geschwindigkeitsmessung, die sehr genau gemessen werden kann, ist die Schwankungsbreite der Entfernungsmesswerte sehr groß; wofür es mehrere Ursachen gibt. So erstrecken sich die Punktreflexionen, die von einem Fahrzeug zur Radarantenne gelangen, auf die gesamte Fahrzeugkontur, auf die die Radarstrahlung projiziert wird. Der auf ein durch das Radarfeld fahrendes Fahrzeug projizierte Querschnitt der Radarstrahlung ändert sich in Abhängigkeit von der jeweiligen Geometrie des Fahrzeuges sowie seiner Position im Radarfeld, beginnend vom Eintritt in bis hin zum Austritt aus dem Radarfeld. Durch den Radarempfänger wird daher zu jedem Messzeitpunkt eine Summe von Messwerten aus Partialreflexionen detektiert. Statistisch wird diese Summe zusammen mit anderen parasitär wirkenden Reflektoren wie Leitplanken oder Metallzäunen im Regelfall als Rayleigh-Verteilung empfangen. Es werden Entfernungen gemessen, welche in der Größenordnung der Fahrbahnbreite und der Fahrzeugabmaße streuen können.

Eine eindeutige Identifikation eines Fahrzeuges aus daraus gebildeten Mittelwerten ist infolge des unterschiedlichen Reflexionsverhaltens der Fahrzeuge und möglicher Mehrfachreflexionen nicht sicher möglich.

Selbst, wenn Messwerte außerhalb einer vorgegebenen Toleranzbreite ignoriert werden und der Mittelwert nur aus den verbleibenden Messwerten gebildet wird, womit eine Verfälschung des gemittelten Entfernungswertes in Folge von Partialreflexionen an parasitär wirkenden Reflektoren ausgeschlossen wird, ist nicht für jede Messsituation eine Identifikation anhand des gemittelten Entfernungswertes und dessen Zuordnung zu einer Fahrbahn möglich.

Mit dem Ziel der sicheren Zuordnung von Messwerten zu einem Fahrzeug wird in der DE 10 2007 022 373 A1 vorgeschlagen Messwerte mehrfach, kontinuierlich über die Dauer der Durchfahrt der Fahrzeuge durch den Messbereich abzuleiten, mittels nachfolgend abgeleiteter Messwerte auf die Plausibilität vorheriger Messwerte zu schließen und aus den Entfernungsmesswerten die vom angemessenen Fahrzeug zurückgelegte Fahrzeugspur zu ermitteln, welche zur Identifikation des Fahrzeuges als Markierung in eine Abbildung projiziert werden kann.

Nachteilig an diesem Verfahren ist insbesondere, dass Fehlmessungen z. B. infolge von Knickstrahlreflexionen erst mit der Bildauswertung festgestellt werden. Die Glaubwürdigkeit des Messverfahrens wird damit subjektiv herabgesetzt.

Es ist auch bekannt die Messungen mit zwei Messanordnungen durchzuführen, um die Richtigkeit von Messwerten gegebenenfalls bestätigen zu können und eine Anmessung über Knickstrahlreflexion auszuschließen Dies erfordert allerdings den doppelten gerätetechnischen Aufwand.

Der Erfindung liegt die Aufgabe zugrunde, ein Verfahren und eine Anordnung zu finden bei dem mit einem geringen Messaufwand sicher festgestellt werden kann, dass die erhaltenen Messwerte von einem Fahrzeug nicht durch Knickstrahlreflexion verursacht sind.

Die Aufgabe wird durch ein Verfahren zur Erfassung von Messdaten von einem ein Radarfeld durchfahrenden Fahrzeug gelöst, bei dem, ausgehend von einem Radargerät, eine Radarstrahlung, die ein Radarfeld mit einer Radarachse definiert, horizontal über eine Fahrbahn gerichtet wird und ein erster Anteil der Radarstrahlung an einem das Radarfeld in einer Fahrtrichtung durchfahrenden Fahrzeug direkt zum Radargerät zurück reflektiert wird. Der erste Anteil der Radarstrahlung wird in Form von direkten Reflexionssignalen durch das Radargerät detektiert. Aus den direkten Reflexionssignalen werden direkte Messdaten des Fahrzeuges abgeleitet.

Das erfindungsgemäße Verfahren ist dadurch gekennzeichnet, dass an einem innerhalb des Radarfeldes in einem bekannten Aufstellabstand zum Radargerät angeordneten Reflektor mit einer Reflektorachse, die mit der Radarachse einen Ausrichtwinkel einschließt, die Radarstrahlung anteilig in ein Reflexionsfeld reflektiert wird, welches einen Teilbereich des Radarfeldes bildet, sodass zeitgleich mit dem ersten Anteil ein zweiter Anteil der Radarstrahlung an einem das Reflexionsfeld durchfahrenden Fahrzeug indirekt über den Reflektor zum Radargerät zurück reflektiert wird. Der indirekt zurückreflektierte Anteil der Radarstrahlung wird in Form von indirekten Reflexionssignalen detektiert und aus den indirekten Reflexionssignalen werden indirekte Messdaten des Fahrzeuges abgeleitet. Die zeitgleich erhaltenen direkten und indirekten Messdaten werden auf Korrelation überprüft. Korrelieren die Messdaten miteinander, ist das der Beweis, dass diese nicht durch Knickstrahlreflexion verursacht sind.

Ein durch das Radarfeld fahrendes Fahrzeug wird zu mehreren Messzeitpunkten an jeweils einem anderen Messpunkt direkt angemessen. Unter dem Messpunkt wird die Position der reflektierenden Fläche des Fahrzeuges, reduziert auf einen Punkt, verstanden, die durch einen aus der Summe aller zu einem Messzeitpunkt abgeleiteten Entfernungsmesswerte und Winkelmesswerte repräsentativen Entfernungswert und repräsentativen Winkelwert bestimmt ist. Das heißt, ein Messpunkt ist definiert durch einen Entfernungswert und einen Winkelwert, bezogen auf das Radargerät bzw. die Empfangsfläche des Radarempfängers mit der Radarachse. Von jedem Messpunkt werden durch das Radargerät direkte Reflexionssignale empfangen und direkte Messdaten abgeleitet. Im Gegensatz dazu gibt es nur einen Messpunkt, an dem durch das Radargerät indirekte Reflexionssignale empfangen werden und indirekte Messdaten abgeleitet werden können.

Der Reflektor ist in einem mit dem Aufstellen des Reflektors festgelegten, bekannten Aufstellabstand zum Radargerät angeordnet, wobei der Aufstellabstand durch die kürzeste Strecke zwischen dem Mittelpunkt des Reflektors, gleich dem Durchstoßpunkt der Reflektorachse auf dem Reflektor und dem Mittelpunkt der Empfangsfläche des Radarempfängers, gleich dem Durchstoßpunkt der Radarachse bestimmt ist.

Unter direkten Reflexionssignalen werden nachfolgend solche Reflexionssignale verstanden, die von Radarstrahlung herrührt, die sich, von dem Radargerät ausgehend, auf direktem Weg zu einem Messpunkt (direkter Abstand) ausbreitet und an diesem Messpunkt von dem Fahrzeug auf direktem Weg zum Radargerät zurückreflektiert wird. Die aus diesen direkten Reflexionssignalen abgeleiteten Messdaten werden als direkte Messdaten bezeichnet, wobei sich der Zusatz "direkt" auf den direkten Weg der Radarstrahlung und nicht auf einen spezifischen Weg der Ableitung der Messdaten bezieht. Der direkte Abstand wird jeweils gemessen. Von einem das Radarfeld durchfahrenden Fahrzeug, wird über den Empfang von direkten Reflexionssignalen zu jedem Messzeitpunkt ein anderer Messpunkt erfasst.

Für die indirekten Reflektionssignale und die indirekten Messdaten gilt das oben Erläuterte mit der Maßgabe, dass der Weg der Radarstrahlung über den Reflektor verläuft (= Aufstellabstand). Ein zweiter Anteil der Radarstrahlung wird an einem Messpunkt von dem Fahrzeug über den Reflektor zum Radargerät zurückreflektiert und dort als indirekte Reflexionssignale empfangen. Von einem das Radarfeld durchfahrenden Fahrzeug, wird über den Empfang von indirekten Reflexionssignalen ein Messpunkt erfasst.

Die Gesamtstrecke Radargerät - Reflektor - Messpunkt wird als indirekter Abstand bezeichnet, dessen Länge gemessen wird. Die Strecke zwischen Reflektor und Messpunkt wird nachfolgend Teilabstand genannt und als Differenz aus dem gemessenen indirekten Abstand und dem Aufstellabstand errechnet.

Die senkrecht auf dem Mittelpunkt des Reflektors stehende Reflektorachse schneidet die Radarachse in einem Schnittpunkt und schließt mit der Radarachse den Ausrichtwinkel ein. Dieser muss nicht bekannt sein, jedoch ist es wesentlich, dass der Ausrichtwinkel so gewählt wird, dass der Messpunkt, von dem indirekte Reflexionssignale erhalten werden können, innerhalb des Radarfeldes liegt.

Von dem Radargerät ausgehende Radarstrahlung trifft anteilig auf den Reflektor auf und wird von diesem in ein Reflexionsfeld reflektiert. Dieses überlappt mindestens anteilig das Radarfeld.

Unter dem Begriff der Korrelation ist im Sinne der Beschreibung zu verstehen, dass die direkten Messdaten und die indirekten Messdaten mindestens eine bestimmte mathematische Beziehung zueinander aufweisen, wobei die Messdaten innerhalb einer bestimmten Toleranzbreite liegen dürfen. So können beispielsweise die aus den direkten und indirekten Reflexionssignalen abgeleiteten Geschwindigkeiten des Fahrzeugs (z. B. eine erste Geschwindigkeit abgeleitet aus den direkten Reflexionssignalen und eine zweite Geschwindigkeit abgeleitet aus den indirekten Reflexionssignalen) um weniger als 2 km/h voneinander abweichen, um die Korrelationsbedingungen noch zu erfüllen.

Vorzugsweise werden zu wenigstens einem Messzeitpunkt aus den direkten Reflektionssignalen als direkte Messdaten eine direkte Radialgeschwindigkeit und ein direkter Positionswinkel abgeleitet.

In Kenntnis eines Aufstellwinkels wird die direkte Radialgeschwindigkeit und die indirekte Radialgeschwindigkeit auf Korrelation überprüft, um gegebenenfalls als einen ersten Beweis abzuleiten, dass die direkten Messdaten und die indirekten Messdaten von einem selben Fahrzeug verursacht sind und nicht über Knickstrahlreflexion angemessen wurden.

Die direkte Radialgeschwindigkeit ist derjenige Anteil eines Geschwindigkeitsvektors des Fahrzeugs, der in direkter Richtung von dem Fahrzeug auf das Radargerät gerichtet ist und gemessen wird. Das Fahrzeug bewegt sich also mit der direkten Radialgeschwindigkeit auf das Radargerät zu. Für ein sich von dem Radargerät entfernendes Fahrzeug gilt das oben Ausgeführte, jedoch ist die direkte Radialgeschwindigkeit dann negativ.

Der direkte Positionswinkel ist der Winkel, der zwischen der Radarachse und einer den direkten Abstand zwischen Radargerät und Messpunkt beschreibenden Strecke liegt und verändert sich mit der Bewegung des Fahrzeuges durch das Radarfeld.

Entsprechend werden aus den indirekten Reflexionssignalen als indirekte Messdaten eine indirekte Radialgeschwindigkeit und ein indirekter Positionswinkel abgeleitet. Die indirekte Radialgeschwindigkeit ist dabei derjenige Anteil des Geschwindigkeitsvektors des Fahrzeugs, der von dem Messpunkt direkt auf den Reflektor gerichtet ist.

Der indirekte Positionswinkel ist der Winkel zwischen Radarachse und derjenigen Strecke, durch deren Länge der Aufstellabstand beschrieben wird. Der indirekte Positionswinkel wird gemessen und ist konstant.

Als Aufstellwinkel kann entweder der Winkel zwischen der Radarachse und der Fahrtrichtung des Fahrzeugs oder der Winkel, den die Radarachse mit dem Fahrbahnrand einschließt, in die Rechnung einbezogen werden.

In einer einfachen ersten Ausgestaltung des erfindungsgemäßen Verfahrens, wird der Aufstellwinkel als Winkel zwischen dem Fahrbahnrand der Fahrbahn und der Radarachse verstanden und wird als bekannt vorausgesetzt, indem er mit der Aufstellung des Radargerätes gezielt eingerichtet wurde. Dieser Aufstellwinkel soll nachfolgend als ein erster Aufstellwinkel bezeichnet werden.

In einer zweiten Ausgestaltung des Verfahrens soll als Aufstellwinkel der Winkel zwischen der Fahrtrichtung des Fahrzeugs und der Radarachse verstanden werden, welcher während jedem Messvorgang fahrzeugspezifisch neu ermittelt werden kann. Dazu wird die Positionsänderung, und damit die Fahrtrichtung des Fahrzeuges, aus den direkten Messdaten mehrerer Messzeitpunkte ermittelt und der Aufstellwinkel als Winkel zwischen der Radarachse und der Fahrtrichtung berechnet. Dieser Aufstellwinkel soll nachfolgend als ein zweiter Aufstellwinkel bezeichnet werden.

Indem der zweite Aufstellwinkel quasi bei den Messungen erlernt wird, werden einerseits die Ergebnisse genauer, wenn das Fahrzeug während der Erfassung nicht exakt parallel zum Fahrbahnrand fährt und andererseits kann auf eine genaue Einrichtung des Radargerätes bei der Aufstellung verzichtet werden. Auch führen spätere Dejustierungen des Radargerätes nicht zu fehlerhaften Messergebnissen.

In allen Fällen, in denen die Fahrtrichtung nicht parallel zum Fahrbahnrand verläuft, weichen erste und zweite Aufstellwinkel voneinander ab.

Die Korrelation der Messdaten wird überprüft, indem aus der direkten Radialgeschwindigkeit und aus der indirekten Radialgeschwindigkeit jeweils eine Geschwindigkeit des Fahrzeuges in Fahrtrichtung abgeleitet wird und die abgeleiteten Geschwindigkeiten darauf hin auf Übereinstimmung überprüft werden, ob diese weniger als eine vorbestimmte Toleranzbreite voneinander abweichen.

Eine solche Toleranzbreite kann ein festgelegter absoluter oder relativer (z. B. Prozent) Wert sein. Die Toleranzbreite kann in weiteren Ausführungen des erfindungsgemäßen Verfahrens auch aus Messdaten hergeleitet sein (z. B. Varianzen oder Standardabweichungen früherer oder aktueller Messreihen). Die Toleranzbreite kann statisch oder dynamisch definiert werden. Bei gegebener Korrelation liegt ein erster Beweis vor, dass die direkten Messdaten und die indirekten Messdaten von einem selben Fahrzeug verursacht sind.

Das erfindungsgemäße Verfahren kann auch so ausgeführt sein, dass aus den direkten Reflexionssignalen als direkte Messdaten ein direkter Abstand und aus den indirekten Reflexionssignalen als indirekte Messdaten ein indirekter Abstand abgeleitet werden und in Kenntnis des Aufstellabstandes sowie der direkten und indirekten Positionswinkel der direkte Abstand und der indirekte Abstand auf Korrelation überprüft werden. Ziel dieses Vorgehens ist es, gegebenenfalls einen zweiten Beweis dafür abzuleiten, dass die direkten Messdaten und die indirekten Messdaten von einem selben Fahrzeug verursacht sind.

Es ist ferner möglich, dass die Überprüfung der Korrelation erfolgt, indem zum einen aus dem direkten Abstand und zum anderen aus dem indirekten Abstand ein Teilabstand abgeleitet wird und die abgeleiteten Teilabstände auf Übereinstimmung überprüft werden.

Die aufgezeigten Möglichkeiten der Überprüfungen auf Korrelation können in weiteren Ausführungen auch kombiniert werden. Eine Kombination erlaubt vorteilhaft eine Überprüfung zweier voneinander weitestgehend unabhängiger Messdaten, wodurch die Zuverlässigkeit der Überprüfung verbessert wird.

In weiteren Ausführungen des erfindungsgemäßen Verfahrens können auch weitere Strecken und Winkel gemessen oder errechnet werden. Diese weiteren Strecken und Winkel können unmittelbar für eine Überprüfung der Korrelation oder zur mittelbaren Ableitung zusätzlicher Lagebeziehungen von Radargerät, Reflektor, Fahrzeug, Fahrbahn etc., verwendet werden

Bei der Anwendung des erfindungsgemäßen Verfahrens wird das durch das Radarfeld fahrende Fahrzeug über die Dauer der Durchfahrt über eine Anzahl von Messpunkten erfasst und direkte Messdaten (z. B. Geschwindigkeit, Positionswinkel, Entfernung) abgeleitet. Mit diesem als "Tracking" bezeichneten Vorgehen ist es möglich, die jeweils abgeleiteten direkten Messdaten miteinander zu vergleichen und auf Konsistenz, d. h. auf die Wahrscheinlichkeit, dass die direkten Messdaten korrekt sind, zu prüfen.

Während die direkten Messdaten an einer Anzahl von Messpunkten ableitbar sind, gibt es nur einen Messpunkt, an dem auch indirekte Reflexionssignale von einem Zielobjekt an das Radargerät zurückreflektiert werden. Um auch die Konsistenz indirekter Messdaten überprüfen zu können, können indirekte Messdaten verschiedener erfasster Fahrzeuge miteinander verglichen.

Das betrifft insbesondere den indirekten Abstand zwischen Messpunkt und Radarempfänger, über den Reflektor gemessen, sowie die zugehörigen indirekten Positionswinkel.

Der Beweis, dass beide Messungen auf ein Fahrzeug zurückzuführen sind, ist eine Bestätigung dafür, dass das Fahrzeug nicht durch Knickstrahlreflexion angemessen wurde. Kann der Beweis nicht erbracht werden, werden die Messergebnisse verworfen und es kommt zu keiner Dokumentation. Das hat gegenüber dem genannten Stand der Technik insbesondere den Vorteil, dass eine Fehlmessung nicht erst durch eine spätere Auswertung aufgedeckt wird, was den subjektiven Eindruck vermitteln kann, dass Fehlmessungen durchaus immer möglich sind.

Die Aufgabe wird ferner durch eine Anordnung zur Erfassung von Messdaten von einem ein Radarfeld durchfahrenden Fahrzeug gelöst. Die Anordnung weist ein Radargerät auf, welches einen Radarsender und einen Radarempfänger umfasst. Der Radarsender ist zur Abstrahlung einer Radarstrahlung geeignet, die über eine Fahrbahn gerichtet ist und ein Radarfeld mit einer Radarachse definiert, welche mit einem Fahrbahnrand oder der Fahrtrichtung eines Fahrzeuges einen Aufstellwinkel einschließt. Die Anordnung ist dadurch gekennzeichnet, dass innerhalb des Radarfeldes in einem bekannten Aufstellabstand zum Radargerät ein Reflektor mit einer Reflektorachse, die mit der Radarachse einen Ausrichtwinkel einschließt, so angeordnet ist, dass der Reflektor die Radarstrahlung über den Reflektor anteilig in ein Reflexionsfeld reflektiert, welches einen Teilbereich des Radarfeldes bildet, sodass der Radarempfänger von einem Messpunkt eines das Reflexionsfeld durchfahrenden Fahrzeuges zeitgleich direkte und indirekte Reflexionssignale empfängt und eine mit dem Radargerät verbundene Rechen- und Speichereinheit vorhanden ist, die dazu ausgelegt ist, aus den direkten und indirekten Reflexionssignalen Messdaten abzuleiten und auf Korrelation zu überprüfen.

In einer vorteilhaften Ausführung der erfindungsgemäßen Anordnung ist der Reflektor ein Retroreflektor mit Reflexionsflächen, die einen Winkel größer 90° und kleiner 180° miteinander einschließen.

Das Reflexionsverhalten eines so gestalteten Reflektors ist invariant hinsichtlich Drehung um seine Hochachse. Wird beispielsweise ein Szenario aus den Komponenten Personenkraftwagen (PKW)- Spiegel - Antenne mit einem Planspiegel aufgebaut, so führt selbst die geringste Verdrehung (z. B. um die Hochachse) des Spiegels dazu, dass sich die Beziehungen zwischen den Komponenten verändern. Wird dagegen der modifizierte Retroreflektor statt des Spiegels verwendet, bleibt der Winkel, der zwischen PKW - Retroreflektor - Antenne aufgespannt ist, immer gleich, auch wenn der Retroreflektor um seine Hochachse gedreht wird. Dies ist wesentlich für die Erfindung und macht diese alltagstauglicher.

Es können in weiteren Ausführungen der erfindungsgemäßen Anordnung auch mehrere Retroreflektoren angeordnet sein. Mit einer solchen Anordnung können beispielsweise Abschattungen erkannt werden.

Die Erfindung wird nachfolgend anhand eines Ausführungsbeispiels und Abbildungen näher erläutert. Dabei zeigen:

Fig. 1      Prinzipskizze einer erfindungsgemäßen Anordnung;

Fig. 2a     grafische Darstellung der Parameter für eine erste Beweisführung;

Fig.2b      grafische Darstellung der Parameter für eine zweite Beweisführung;

Fig. 3      eine Ausführung eines erfindungsgemäßen Reflektors.

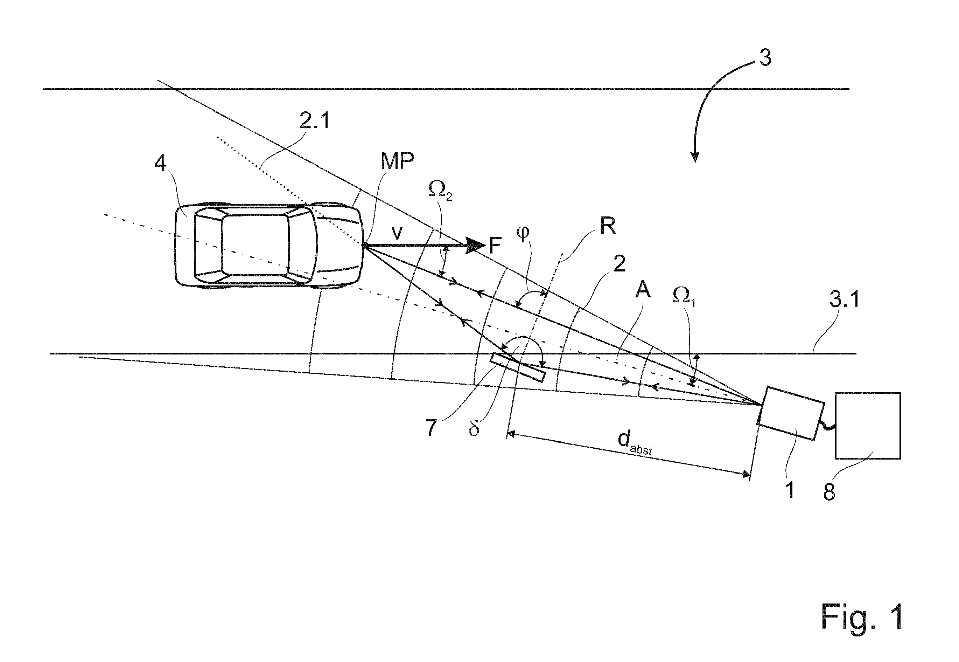

In Fig. 1 sind als wesentliche Bestandteile einer erfindungsgemäßen Anordnung ein an einem Fahrbahnrand 3.1 einer Fahrbahn 3 aufgestelltes Radargerät 1 sowie ein im Radarfeld 2 des Radargerätes 1 angeordneter Reflektor 7 in einer Prinzipskizze gezeigt.

Das Radarfeld 2 wird bestimmt durch eine vom Radargerät 1 in Richtung einer Radarachse A unter einem Öffnungswinkel ausgestrahlten Radarstrahlung. Die Ausdehnung des Radarfeldes 2 in horizontaler Ebene ist in Fig.1 dargestellt.

Der Reflektor 7 ist ein Planspiegel, womit die Reflektorachse R einer Flächennormalen entspricht. Radarstrahlung die auf den Reflektor 7 auftrifft, wird von diesem in ein Reflexionsfeld 2.1 reflektiert, welches eine vertikale Ebene in der Richtung der vom Reflektor 7 reflektierten Radarstrahlung beschreibt, und im Radarfeld 2 liegt.

Das Radargerät 1 ist am Fahrbahnrand 3.1 einer Fahrbahn 3 so aufgestellt, dass die Radarachse A unter einem ersten Aufstellwinkel $\Omega_1$ zum Fahrbahnrand 3.1 über die Fahrbahn 3 gerichtet ist. In einem mit der Aufstellung vorgegebenen und bekannten Aufstellabstand $d_{abst}$ ist der Reflektor 7 so angeordnet und ausgerichtet, dass die senkrecht auf dem Reflektor 7 stehende Reflektorachse R die Radarachse A im Bereich der Fahrbahn 3 unter einem Ausrichtwinkel $\Psi$ schneidet.

Der Reflektor 7 ist so gestaltet, dass sich entlang der Strecke des Aufstellabstands $d_{abst}$ ausbreitende Radarstrahlung auf den Reflektor 7 auftrifft und unter einem Reflexionswinkel $\delta$ reflektiert wird und das Reflexionsfeld 2.1 bildet.

Zum Verständnis der Anordnung und zur Erläuterung des Verfahrens, welches mit der Anordnung erfindungsgemäß durchgeführt werden kann, ist in Fig. 1 auch ein Fahrzeug 4 dargestellt, welches das Radarfeld 2 mit einer Geschwindigkeit v durchfährt. Es befindet sich in der Darstellung an einer Position in der an ihm reflektierte Radarstrahlung zur Ermittlung eines Messpunktes MP führt, der auch innerhalb des Reflexionsfeldes 2.1 liegt. Der dargestellte Geschwindigkeitsvektor v zeigt in Fahrtrichtung F und schließt mit der Radarachse A einen zweiten Aufstellwinkel $\Omega_2$ ein.

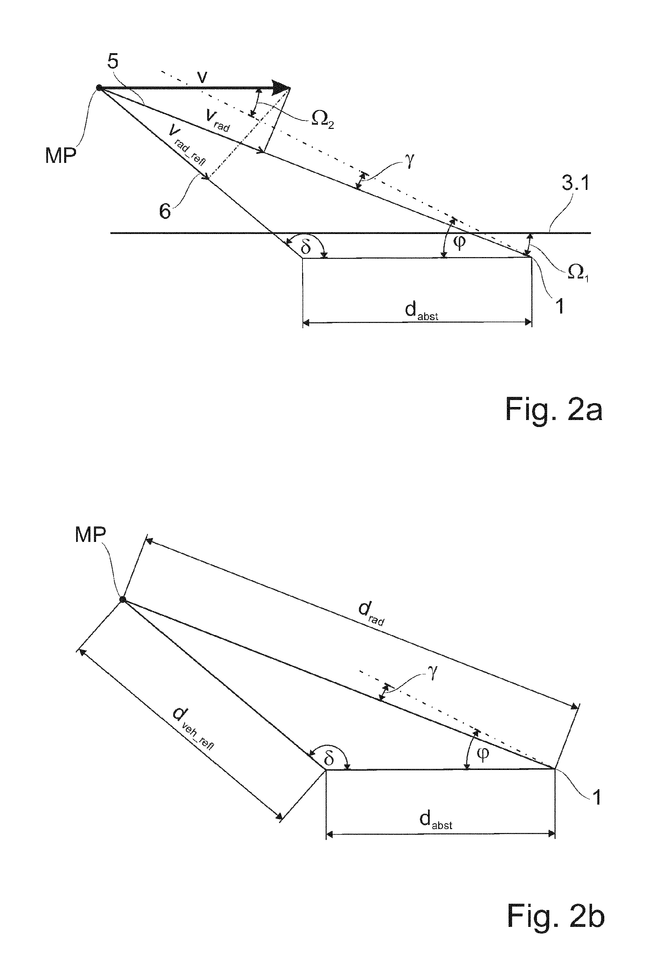

Anhand der Fig. 2a und 2b wird nachstehend das erfindungsgemäße Verfahren erläutert.

Das Fahrzeug 4 kann in dem Radarfeld 2 an einer Anzahl von Messpunkten MP (der Übersicht halber ist exemplarisch nur ein Messpunkt MP gezeigt) angemessen werden, wobei Radarstrahlung direkt auf das Fahrzeug 4 auftrifft und am Messpunkt MP als ein erster Anteil 5 (symbolisch als Pfeil dargestellt) der Radarstrahlung entlang einer einen direkten Abstand $d_{rad}$ zwischen Radargerät 1 und Messpunkt MP bezeichnenden Strecke direkt zu dem Radargerät 1 zurückreflektiert wird. Diese direkten Reflexionssignale werden durch das Radargerät 1 empfangen und an eine Rechen- und Steuereinheit 8 weitergeleitet, mittels der aus den direkten Reflexionssignalen direkte Messdaten abgeleitet werden.

Als direkte Messdaten wird eine direkte Radialgeschwindigkeit $v_{rad}$ gemessen. Diese direkte Radialgeschwindigkeit $v_{rad}$ ist der in direkter Richtung auf das Radargerät 1 weisende Anteil der Geschwindigkeit v des Fahrzeugs 4. Außerdem wird als ein direkter Positionswinkel $\gamma$ ein Winkel gemessen, unter dem der Messpunkt MP im gemessenen, direkten Abstand $d_{rad}$ zur Radarachse A erfasst wird.

Bei Kenntnis der direkten Radialgeschwindigkeit $v_{rad}$, des direkten Positionswinkels $\gamma$ und des ersten Aufstellwinkels $\Omega_1$ oder des zweiten Aufstellwinkels $\Omega_2$ kann die Geschwindigkeit v abgeleitet werden.

$$\text{Dabei gilt: 1)} \qquad v_{rad} = v \cos(\Omega_1 - \gamma) \text{ oder } v_{rad} = v \cos(\Omega_2 - \gamma)..$$

Wird die Geschwindigkeit v an einer Anzahl von Messpunkten MP abgeleitet, können diese Geschwindigkeiten v miteinander verglichen werden und anhand einer Regel auf Konsistenz überprüft werden. Weichen die Geschwindigkeiten v höchstens um einen bestimmten Betrag voneinander ab, wird dies als Beweis angesehen, dass alle Geschwindigkeiten v von demselben Fahrzeug 4 abgeleitet wurden.

Zu dem Messzeitpunkt, zu dem das Fahrzeug 4 an dem in Fig. 1 dargestellten Messpunkt MP erfasst wird, werden neben den oben beschriebenen direkten Reflexionssignalen auch indirekte Reflexionssignale von dem Radargerät 1 empfangen.

Von dem Reflektor 7 in das Reflexionsfeld 2.1 reflektierte Radarstrahlung wird als zweiter Anteil (symbolisch als Pfeil dargestellt) der Radarstrahlung 6 von dem Messpunkt MP entlang eines Teilabstandes $d_{veh\_refl}$ zum Reflektor 7 und von dort entlang des Aufstellabstandes $d_{abst}$ zum Radargerät 1 zurückreflektiert.

Diese indirekten Reflexionssignale werden vom Radargerät 1 empfangen und an die Rechen- und Steuereinheit 8 weitergeleitet. Aus den indirekten Reflexionssignalen sind als indirekte Messdaten die indirekte Radialgeschwindigkeit $v_{rad\_refl}$ ableitbar, mit der sich das Fahrzeug 4 auf den Reflektor 7 zu bewegt.

Dabei gilt: Bei Kenntnis der indirekten Radialgeschwindigkeit $v_{rad-refl}$, des indirekten Positionswinkels $\phi$ und der Fahrtrichtung F kann die Geschwindigkeit v in Fahrtrichtung F abgeleitet werden.

$$2) \qquad v_{rad\_refl} = v \cos(180° - \delta - \phi + \Omega_1) \text{ oder } v_{rad\_refl} = v \cos(180° - \delta - \phi + \Omega_2).$$

Ist eine Geschwindigkeit v aus der direkten Radialgeschwindigkeit $v_{rad}$ und eine Geschwindigkeit v aus der indirekten Radialgeschwindigkeit $v_{rad\_refl}$ abgeleitet, werden diese Geschwindigkeiten v miteinander verglichen. Weichen die Geschwindigkeiten um nicht mehr als einen bestimmten Betrag voneinander ab, kann dies als ein erster Beweis dafür angenommen werden, dass das Fahrzeug 4 nicht über Knickstrahlreflexion angemessen wurde.

Um eine weitere Überprüfungsmöglichkeit der abgeleiteten Messdaten zu erhalten, wird der Teilabstand $d_{veh\_refl}$ einmal aus den direkten Messdaten mittels der

Beziehung:

$$d_{veh\_refl} = \sqrt{d_{rad}^2 + d_{abst}^2 - 2d_{rad}d_{abst}\cos(\phi - \gamma)}$$

berechnet und abrufbar abgespeichert. Der Teilabstand $d_{veh\_refl}$ wird außerdem berechnet, indem ein indirekter Abstand $d_{rad-refl}$ als eine Länge der Strecke zwischen Messpunkt MP, Reflektor 7 und Radargerät 1 gemessen und von dem indirekten Abstand $d_{rad-refl}$ der Aufstellabstand $d_{abst}$ subtrahiert wird. Die über die beiden Wege errechneten Längen des Teilabstands $d_{veh\_refl}$ werden miteinander verglichen.

Weichen diese Längen um nicht mehr als einen bestimmten Betrag voneinander ab, kann dies als ein zweiter Beweis dafür angenommen werden, dass das Fahrzeug 4 nicht über Knickstrahlreflexion angemessen wurde.

In weiteren Ausführungen können die Überprüfungen auch dadurch erfolgen, dass die Geschwindigkeiten v und / oder die Teilabstände $d_{veh\_refl}$ in einer bestimmten mathematischen Beziehung zueinander stehen.

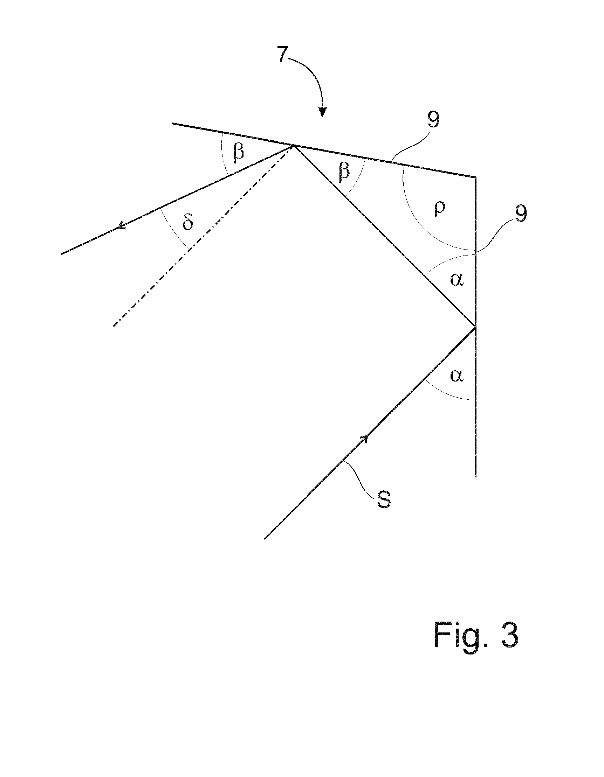

Eine Ausführung eines erfindungsgemäßen Reflektors 7 ist in Fig. 3 stark schematisiert gezeigt. Dargestellt sind zwei Reflexionsflächen 9 eines modifizierten Retroreflektors in der Draufsicht auf deren Stirnseiten. Durch die Reflexionsflächen 9 wird ein Reflektorwinkel ρ eingeschlossen, der größer 90° und kleiner 180° ist. Der Strahlengang S zeigt beispielhaft einen Strahl einer auf den Reflektor 7 auftreffenden Radarstrahlung. Der Strahlengang S trifft unter einem Einfallswinkel α auf einer der Reflexionsflächen 9 auf und wird von dort auf die andere Reflexionsfläche 9 reflektiert, auf der sie unter einem Ausfallwinkel β auftrifft und unter dem gleichen Winkel β wieder von dem Reflektor 7 zurückreflektiert wird.

Für die Winkel gilt:

$$2\alpha + 2\beta + \delta = 180°$$

$$2\alpha + 2\beta + 2\rho = 360°$$

$$\delta = 2\rho - 180°$$

Durch die Strichlinie ist der theoretische Strahlengang S eines Retroreflektors mit einem Winkel p von 90° angedeutet. Durch die erfindungsgemäße Gestaltung des Reflektors 7 wird die Radarstrahlung immer in einem Reflexionswinkel δ zur auftreffenden Strahlung, abweichend vom Strahlengang eines üblichen Retroreflektors mit p = 90°, welcher auftreffende Strahlung in sich selbst reflektiert, reflektiert.

Bezugszeichenliste

1       Radargerät

2       Radarfeld

2.1     Reflexionsfeld

3       Fahrbahn

3.1     Fahrbahnrand

| | | |
|---|---|---|
| 4 | Fahrzeug |
| 5 | erster Anteil einer Radarstrahlung |
| 6 | zweiter Anteil einer Radarstrahlung |
| 7 | Reflektor |
| 8 | Rechen- und Speichereinheit |
| 9 | Reflexionsfläche |
| A | Radarachse |
| R | Reflektorachse |
| F | Fahrtrichtung |
| MP | Messpunkt |
| S | Strahlengang |
| $\Omega_1$ | erster Aufstellwinkel |
| $\Omega_2$ | zweiter Aufstellwinkel |
| $\Psi$ | Ausrichtwinkel |
| v | Geschwindigkeit (des Fahrzeugs 4) |
| $v_{rad}$ | direkte Radialgeschwindigkeit |
| $V_{rad\_refl}$ | indirekte Radialgeschwindigkeit |
| $d_{rad}$ | direkter Abstand |
| $d_{rad-refl}$ | indirekter Abstand |
| $d_{abst}$ | Aufstellabstand |
| $d_{veh-refl}$ | Teilabstand |
| $\gamma$ | direkter Positionswinkel |
| $\phi$ | indirekter Positionswinkel |
| $\rho$ | Reflektorwinkel |
| $\alpha$ | Einfallswinkel |
| $\beta$ | Ausfallwinkel |
| $\delta$ | Reflexionswinkel |

**Patentansprüche**

1.  Verfahren zur Erfassung von Messdaten von einem ein Radarfeld (2) durchfahrenden Fahrzeug (4),

bei dem ausgehend von einem Radargerät (1) eine Radarstrahlung, die ein Radarfeld (2) mit einer Radarachse (A) definiert, horizontal über eine Fahrbahn (3) gerichtet wird,

ein erster Anteil der Radarstrahlung (5) an einem das Radarfeld (2) in einer Fahrtrichtung (F) durchfahrenden Fahrzeug (4) direkt zum Radargerät (1) zurückreflektiert wird,

der erste Anteil der Radarstrahlung (5) in Form von direkten Reflexionssignalen durch das Radargerät (1) detektiert wird und

aus den direkten Reflexionssignalen Messdaten des Fahrzeuges (4) abgeleitet werden, die aufgrund ihrer Ableitung von direkten Reflexionssignalen als direkte Messdaten bezeichnet werden, **dadurch gekennzeichnet, dass** innerhalb des Radarfeldes (2) ein Reflektor (7) aufgestellt und so ausgerichtet wird, dass eine senkrecht auf dem Reflektor (7) stehende Reflektorachse (R) die Radarachse (A) unter einem Ausrichtwinkel ($\Psi$) schneidet und mit dem Aufstellen des Reflektors (7) ein bekannter Aufstellabstand ($d_{abst}$) des Reflektors (7) zum Radargerät (1) festgelegt wird, wobei der Aufstellabstand ($d_{abst}$) durch die kürzeste Strecke zwischen dem Mittelpunkt des Reflektors (7), gleich dem Durchstoßpunkt der Reflektorachse (R) auf dem Reflektor (7) und dem Mittelpunkt einer Empfangsfläche eines Radarempfängers, gleich dem Durchstoßpunkt der Radarachse (A) bestimmt ist,

dass an dem Reflektor (7) die Radarstrahlung anteilig in ein Reflexionsfeld (2.1) reflektiert wird, welches einen Teilbereich des Radarfeldes (2) bildet, sodass zeitgleich mit dem ersten Anteil (5) ein zweiter Anteil der Radarstrahlung (6) an einem das Reflexionsfeld (2.1) durchfahrenden Fahrzeug (4) indirekt über den Reflektor (7) zum Radargerät (1) zurückreflektiert wird,

dass der indirekt zurückreflektierte Anteil der Radarstrahlung in Form von indirekten Reflexionssignalen detektiert wird,

dass aus den indirekten Reflexionssignalen Messdaten des Fahrzeuges (4) abgeleitet werden, die aufgrund ihrer Ableitung von indirekten Reflexionssignalen als indirekte Messdaten bezeichnet werden und

dass die zeitgleich erhaltenen direkten und indirekten Messdaten auf Korrelation überprüft werden, um einen Beweis abzuleiten, dass die direkten Messdaten und die indirekten Messdaten von einem selben Fahrzeug (4) verursacht sind.

2. Verfahren nach Anspruch 1, **dadurch gekennzeichnet,**
**dass** zu wenigstens einem Messzeitpunkt aus den direkten Reflektionssignalen als direkte Messdaten eine direkte Radialgeschwindigkeit ($v_{rad}$), als derjenige Anteil eines Geschwindigkeitsvektors des Fahrzeugs (4), der in direkter Richtung von dem Fahrzeug (4) auf das Radargerät gerichtet ist und gemessen wird, und ein direkter Positionswinkel ($\gamma$), als ein Winkel, der zwischen der Radarachse und einer den direkten Abstand zwischen Radargerät und Messpunkt beschreibenden Strecke liegt und der sich mit der Bewegung des Fahrzeuges durch das Radarfeld verändert, und aus den indirekten Reflexionssignalen als indirekte Messdaten eine indirekte Radialgeschwindigkeit ($v_{rad\_refl}$), als derjenige Anteil des Geschwindigkeitsvektors des Fahrzeugs, der von dem Messpunkt direkt auf den Reflektor gerichtet ist, und ein indirekter Positionswinkel ($\phi$), als ein gemessener und konstanter Winkel zwischen Radarachse und derjenigen Strecke, durch deren Länge der Aufstellabstand beschrieben wird, abgeleitet werden und dass in Kenntnis eines ersten oder zweiten Aufstellwinkels ($\Omega1, \Omega2$) die direkte Radialgeschwindigkeit ($v_{rad}$) und die indirekte Radialgeschwindigkeit ($v_{rad\_refl}$) auf Korrelation überprüft werden, um daraus gegebenenfalls als einen ersten Beweis abzuleiten, dass die direkten Messdaten und die indirekten Messdaten von einem selben Fahrzeug (4) verursacht sind, wobei der erste Aufstellwinkel ($\Omega1$) als ein Winkel zwischen der Radarachse (A) und einem Fahrbahnrand (3.1) der Fahrbahn (3) wird und der zweite Aufstellwinkel ($\Omega_2$) ein Winkel zwischen der Radarachse (A) und der Fahrtrichtung (F) des Fahrzeugs (4) ist.

3. Verfahren nach Anspruch 1 oder 2, **dadurch gekennzeichnet,**
**dass** aus den Messdaten mehrerer Messzeitpunkte die Positionsänderung, und damit die Fahrtrichtung (F), des Fahrzeuges (4) ermittelt wird

4. Verfahren nach Anspruch 2 oder 3, **dadurch gekennzeichnet,**
**dass** der zweite Aufstellwinkel ($\Omega_2$) als Winkel zwischen der Radarachse (A) und der Fahrtrichtung (F) errechnet wird.

5. Verfahren nach Anspruch 2, 3 oder 4, **dadurch gekennzeichnet,**
**dass** die Überprüfung der Korrelation erfolgt, indem zum einen aus der direkten Radialgeschwindigkeit ($v_{rad}$) und zum anderen aus der indirekten Radialgeschwindigkeit ($v_{rad\_refl}$) eine Geschwindigkeit ($v$) des Fahrzeuges (4) in Fahrtrichtung (F) abgeleitet wird und die abgeleiteten Geschwindigkeiten ($v$) auf Übereinstimmung überprüft werden.

6. Verfahren nach einem der Ansprüche 2 - 5, **dadurch gekennzeichnet,**
**dass** als direkte Messdaten auch ein direkter Abstand ($d_{rad}$) und als indirekte Messdaten auch ein indirekter Abstand ($d_{rad-refl}$) abgeleitet werden und in Kenntnis des Aufstellabstandes ($d_{abst}$) sowie der Positionswinkel ($\gamma, \phi$) der direkte

Abstand ($d_{rad}$) und der indirekte Abstand ($d_{rad-refl}$) auf Korrelation überprüft werden, um daraus gegebenenfalls als einen zweiten Beweis abzuleiten, dass die direkten Messdaten und die indirekten Messdaten von einem selben Fahrzeug (4) verursacht sind, wobei der direkte Abstand ($d_{rad}$) durch den direktem Weg zwischen Radargerät und einem Messpunkt bestimmt ist und ein Messpunkt als eine Position der reflektierenden Fläche des Fahrzeuges, reduziert auf einen Punkt, gegeben ist und der indirekte Abstand als eine Gesamtstrecke Radargerät - Reflektor - Messpunkt gemessen wird.

7. Verfahren nach Anspruch 6, **dadurch gekennzeichnet, dass** die Überprüfung der Korrelation erfolgt, indem zum einen aus dem direkten Abstand ($d_{rad}$) und zum anderen aus dem indirekten Abstand ($d_{rad-refl}$) ein Teilabstand ($d_{veh-refl}$) abgeleitet wird und die abgeleiteten Teilabstände ($d_{veh-refl}$) auf Übereinstimmung überprüft werden.

8. Anordnung zur Erfassung von Messdaten von einem ein Radarfeld (2) durchfahrenden Fahrzeug (4) mit einem Radargerät (1), umfassend einen Radarsender und einen Radarempfänger, zur Abstrahlung einer Radarstrahlung, die über eine Fahrbahn (3) gerichtet ist und ein Radarfeld (2) mit einer Radarachse (A) definiert, welche mit einem Fahrbahnrand (3.1) einen ersten Aufstellwinkel ($\Omega_1$) oder der Fahrtrichtung (F) eines Fahrzeuges (4) einen zweiten Aufstellwinkel ($\Omega_2$) einschließt, **dadurch gekennzeichnet,**
**dass** innerhalb des Radarfeldes (2) in einem bekannten Aufstellabstand ($d_{abst}$) ein Reflektor (7) mit einer senkrecht auf dem Reflektor (7) stehenden Reflektorachse (R), die mit der Radarachse (A) einen Ausrichtwinkel ($\Psi$) einschließt, so angeordnet und ausgerichtet ist, dass der Reflektor (7) die Radarstrahlung über den Reflektor (7) anteilig in ein Reflexionsfeld (2.1) reflektiert, welches einen Teilbereich des Radarfeldes (2) bildet, sodass der Radarempfänger zu einem Messpunkt (MP) von einem das Reflexionsfeld (2.1) durchfahrenden Fahrzeug (4) zeitgleich direkte und indirekte Reflexionssignale empfängt und eine mit dem Radargerät (1) verbundene Rechen- und Speichereinheit (8) vorhanden ist, die dazu ausgelegt ist, aus den Reflexionssignalen Messdaten abzuleiten, auf Korrelation zu überprüfen, um einen Beweis abzuleiten, dass die direkten Messdaten und die indirekten Messdaten von einem selben Fahrzeug (4) verursacht sind.

9. Anordnung nach Anspruch 8, **dadurch gekennzeichnet, dass** der Reflektor (7) ein Retroreflektor ist, mit Reflexionsflächen (9), die einen Reflektorwinkel (p) größer 90° und kleiner 180° miteinander einschließen.

Fig. 1

Fig. 2a

Fig. 2b

Fig. 3

Europäisches
Patentamt

European
Patent Office

Office européen
des brevets

# EUROPÄISCHER RECHERCHENBERICHT

Nummer der Anmeldung

EP 12 19 7913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 10 2007 022373 A1 (ROBOT VISUAL SYSTEMS GMBH [DE]) 13. November 2008 (2008-11-13) * das ganze Dokument * ----- | 1-9 | INV. G01S13/92 H01Q19/00 H01Q25/00 |
| A | US 4 369 444 A (BLUMLING JAMES P) 18. Januar 1983 (1983-01-18) * Spalte 1, Zeile 33 - Spalte 2, Zeile 25; Abbildung 1 * ----- | 1-9 | |
| A | US 2009/315755 A1 (CORNIC PASCAL [FR] ET AL) 24. Dezember 2009 (2009-12-24) * das ganze Dokument * ----- | 1-9 | |
| A,D | DE 103 11 959 A1 (DENSO CORP [JP]) 2. Oktober 2003 (2003-10-02) * das ganze Dokument * ----- | 1-9 | |
| A | EP 0 533 223 A1 (HOLLANDSE SIGNAALAPPARATEN BV [NL]) 24. März 1993 (1993-03-24) * das ganze Dokument * ----- | 1-9 | RECHERCHIERTE SACHGEBIETE (IPC) |
| A | US 3 210 762 A (BRABANT JOHN M) 5. Oktober 1965 (1965-10-05) * das ganze Dokument * ----- | 1-9 | G01S H01Q |

Der vorliegende Recherchenbericht wurde für alle Patentansprüche erstellt

| Recherchenort | Abschlußdatum der Recherche | Prüfer |
|---|---|---|
| München | 8. April 2013 | Rudolf, Hans |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 12 19 7913

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2013

| Im Recherchenbericht angeführtes Patentdokument | Datum der Veröffentlichung | Mitglied(er) der Patentfamilie | Datum der Veröffentlichung |
|---|---|---|---|
| DE 102007022373 A1 | 13-11-2008 | AU 2008202015 A1<br>DE 102007022373 A1<br>EP 1990655 A1<br>US 2008278365 A1 | 27-11-2008<br>13-11-2008<br>12-11-2008<br>13-11-2008 |
| US 4369444 A | 18-01-1983 | KEINE | |
| US 2009315755 A1 | 24-12-2009 | EP 2021820 A1<br>FR 2901613 A1<br>US 2009315755 A1<br>WO 2007131923 A1 | 11-02-2009<br>30-11-2007<br>24-12-2009<br>22-11-2007 |
| DE 10311959 A1 | 02-10-2003 | DE 10311959 A1<br>JP 3770189 B2<br>JP 2003270342 A<br>US 2003179129 A1 | 02-10-2003<br>26-04-2006<br>25-09-2003<br>25-09-2003 |
| EP 0533223 A1 | 24-03-1993 | AU 653047 B2<br>AU 2079792 A<br>BR 9203123 A<br>CA 2074411 A1<br>CN 1069808 A<br>DE 69222499 D1<br>DE 69222499 T2<br>EP 0533223 A1<br>ES 2108081 T3<br>GR 3025708 T3<br>JP H05196725 A<br>NL 9101394 A<br>NO 923161 A<br>TR 27024 A<br>US 5278564 A<br>ZA 9205524 A | 15-09-1994<br>18-02-1993<br>30-03-1993<br>17-02-1993<br>10-03-1993<br>06-11-1997<br>19-03-1998<br>24-03-1993<br>16-12-1997<br>31-03-1998<br>06-08-1993<br>16-03-1993<br>17-02-1993<br>10-10-1994<br>11-01-1994<br>28-04-1993 |
| US 3210762 A | 05-10-1965 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007022373 A1
- DE 10311959 A1
- EP 0935764 B1